# EUROPÄISCHE PATENTSCHRIFT

(11) **EP 0 727 346 B1**
(45) Veröffentlichungstag und Bekanntmachung des Hinweises auf die Patenterteilung: **25.04.2001**
(21) Anmeldenummer: 95120128.4
(22) Anmeldetag: 20.12.1995
(51) Int. Cl.: B62J 27/00, B60R 22/46

(54) **Sicherheitseinrichtung, insbesondere für ein Zweirad**
Safety device particularly for a two-wheeled vehicle
Dispositif de sûreté notamment pour un véhicule à deux roues

(30) Priorität: 17.02.1995 DE 19505448
(43) Veröffentlichungstag der Anmeldung: 21.08.1996
(73) Patentinhaber: Bayerische Motoren Werke Aktiengesellschaft, 80788 München (DE)
(72) Erfinder: Nurtsch, Bernd, D-83536 Gars am Inn (DE)

(56) Entgegenhaltungen:
- CA-A- 1 233 441
- DE-A- 4 211 374
- US-A- 4 311 335
- US-A- 5 076 598

## Beschreibung

Die Erfindung betrifft eine Sicherheitseinrichtung, insbesondere für ein Zweirad, nach dem Oberbegriff des Hauptanspruchs.

Es ist bereits bekannt, den Fahrer eines Zweirades dadurch zu schützen, daß dieser mindestens teilweise vom Fahrzeugrahmen umgeben ist und auf seinem Sitz durch eine Sicherheitsgurteinrichtung gehalten wird. Bei einem Unfall wirkt eine solche Sicherheitseinrichtung ähnlich der, wie sie aus dem Personenkraftwagen bekannt ist. Der Fahrer wird am Fahrzeug festgehalten, die auf ihn wirkenden Kräfte können so durch Knautschzonen teilweise abgebaut werden.

Die US Patentschrift 4 311 335 beschreibt ein Zweirad, dessen Sicherheitseinrichtung sehr kompliziert ist. Dadurch ist es sehr teuer in der Herstellung, was wiederum der Akzeptanz einer solchen Sicherheitseinrichtung entgegensteht.

Desweiteren beschreibt die DE-A-4211374 Einzelheiten einer mechanischen Strammeinrichtung für einen Gurtaufroller, ohne irgendwelche weiteren Teile einer Sicherheitseinrichtung, wie Sitz, Fahrzeugrahmen oder Sicherheitsgurtstruktur mit einzubeziehen. Sie zeigt eine Gestaltung eines Gurtautomaten so, daß eine Seiltrommel, beaufschlagt von einer Druckfeder, eine Gurtaufwickelwelle eines Gurtaufrollers antreibt.

Der nächstliegende Stand der Technik, CA-A-123 3441, zeigt eine Sicherheitseinrichtung für ein Zweirad, bestehend aus einem Fahrzeugrahmen, der mindestens den Fahrer des Fahrzeugs mindestens teilweise umgibt und mindestens einem Sitz mit dazugehöriger Sicherheitsgurteinrichtung aus zwei Schultergurten, wobei die beiden Enden jedes Schultergurtes an fahrzeugfesten Punkten so befestigt sind, dass sich jeder Schultergurt am Fahrer entlang von dessen Schulterbereich bis zu dessen Oberschenkelbereich erstreckt.

Aufgabe der Erfindung ist es, eine gattungsgemäße Sicherheitseinrichtung, insbesondere für ein Zweirad, bereitzustellen, mit der der Körper des Fahrers bei einem Unfall schnell und zuverlässig in seiner definierten Sitzposition festgelegt werden kann, während im normalen Fahrbetrieb, die zum Fahren, insbesondere eines Zweirads nötige, möglichst große Bewegungsfreiheit für den Fahrer erhalten bleiben soll.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung sind zwei Bauchgurte vorgesehen, wobei je ein Bauchgurt durch je einen Schultergurt hindurchgeschleift geführt ist und ein erstes Ende jedes Bauchgurtes mit einem Gurtstrammer verbunden ist, der am Fahrzeug fest angelenkt ist, während die zweiten Enden der Bauchgurte über ein zentrales Schloß miteinander verbindbar sind. Durch einen Gurtstrammer kann der Körper des Fahrers am Sitz fixiert werden. Das hat den Vorteil, daß der Fahrer, trotz größtmöglicher Bewegungsfreiheit im normalen Fahrbetrieb, im Fall eines Unfalls direkt am Sitz festgelegt wird und so innerhalb des ihn umgebenden Fahrzeugrahmens festgehalten wird. Es wird eine Relativbewegung zwischen Fahrer und Fahrzeug vermieden, was den Fahrer vor Stoßverletzungen schützt, wobei dieser gleichzeitig durch den ihn umgebenden Fahrzeugrahmen ebenfalls geschützt ist.

Bei einer bevorzugten Ausführung der Erfindung können die Schultergurte über ihr schulterseitiges Ende ebenfalls durch Gurtstrammer am Körper des Fahrers angelegt werden. Eine Sicherheitsgurteinrichtung mit Gurtstrammern an den Beckengurten und den schulterseitigen Enden der Schultergurte legt den Fahrer im Falle eines Unfalls schnell und präzise am Sitz fest, auch wenn der Oberkörper zum Zeitpunkt des Unfalleintritts aufgrund der Fahrsituation relativ weit von der Sitzfläche entfernt war. So ist ein optimaler Schutz innerhalb des Fahrzeugrahmens gewährleistet.

In einer vorteilhaften Ausführung der Erfindung wird der Sitz so ausgebildet, daß ein Abtauchen des Fahrers unter dem Beckengurt hindurch verhindert wird. Dazu wird am Sitz, vor der Sitzfläche, im Schrittbereich des Fahrers eine sich nach oben erstreckende Rampe ausgeprägt. So fixieren Sitz und Sicherheitsgurt den Fahrer beim Unfall in seiner Position, wahrend sich dieser im normalen Fahrbetrieb relativ frei bewegen kann. Dies ist insbesondere zum Fahren eines Zweirades notwendig, das mit dem ganzen Körper gelenkt wird.

Ein bevorzugtes Ausführungsbeispiel der Erfindung ist in der nachfolgenden Beschreibung und der zugehörigen Zeichnung näher dargestellt. Es zeigen:
- Figur 1: eine Ausführung eines Sicherheitsgurts mit Gurtstrammer an Becken- und Schultergurten,
- Figur 2: ein Fahrzeug mit einer entsprechenden Sicherheitseinrichtung, bestehend aus Fahrzeugrahmen, Sitz und Sicherheitsgurt.

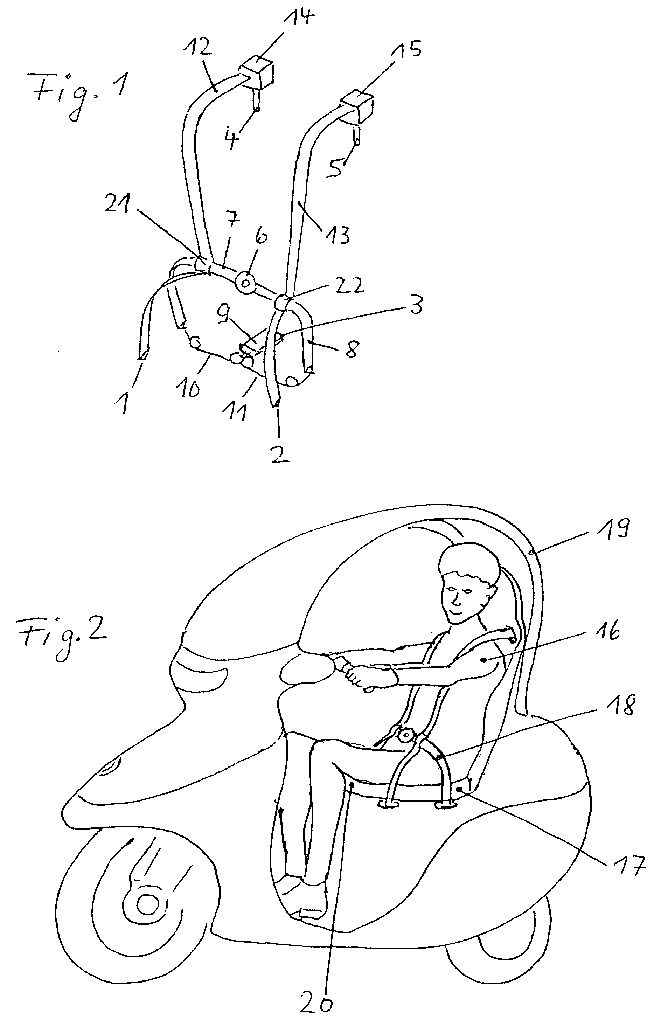

Figur 1 zeigt einen Sicherheitsgurt, der an fünf fahrzeugfesten Punkten 1 bis 5 am nicht gezeichneten Sitz oder an nicht gezeichneten anderen Fahrzeugteilen in der Nähe des Sitzes angebracht ist. Der Sicherheitsgurt ist symmetrisch zu einer aus Längs- und Hochachse eines nicht gezeichneten Fahrzeugs aufgespannten Ebene ausgebildet, die durch ein vorderes zentrales Schloß 6 beider Beckengurte 7, 8 verläuft. Ein am fahrzeugfesten Befestigungspunkt 3 angebrachter Gurtstrammer 9 ist über je einen Seilzug 10, 11 mit dem fahrzeugseitigen Ende jedes Beckengurtes 7, 8 verbunden. Die beiden Beckengurte 7, 8 sind so angebracht, daß sie die Hüfte des nicht gezeichneten Fahrers am Sitz fixieren. Die fahrzeugseitigen Enden können zusatzlich mit je einem Gurtaufrollautomaten mit Trägheitssperre versehen sein. Die beiden anderen Enden der Beckengurte 7, 8 sind über das Schloß 6 miteinander koppelbar.

Die fahrzeugfesten Befestigungsstellen 1, 2 für einen rechten und einen linken Schultergurt 12, 13 befinden sich am oder in der Nahe des nicht gezeichneten Sitzes und zwar im Bereich seitlich der Oberschenkel des nicht gezeichneten Fahrers. Von diesen Befestigungsstellen 1, 2 aus erstrecken sich der rechte und der linke Schultergurt 12, 13 über jeweils eine rechte und eine linke nicht gezeichnete Oberkörperhälfte des Fahrers bis zu dessen Schulterbereich. Dort sind die Schultergurte 12, 13 an den fahrzeugfesten Befestigungsstellen 4, 5 über je einen Gurtstrammer 14, 15 befestigt. Zusatzlich können auch hier nicht gezeichnete Gurtaufwickeleinrichtungen mit Trägheitssperren verwendet werden.

An den Stellen, an denen sich die Bauchgurte 7, 8 mit den Schultergurten 12, 13 kreuzen, ist jeder Bauchgurt 7, 8 durch den jeweiligen Schultergurt 12, 13 hindurchgeschleift. Dazu sind in den Schultergurten 12, 13 Laschen 21, 22 ausgebildet.

Figur 2 zeigt eine Sicherheitseinrichtung, ausgebildet an einem Zweirad. Der Fahrer 16 sitzt auf einem Sitz 17 und hat eine Sicherheitsgurteinrichtung 18 entsprechend Figur 1 angelegt. Ein Fahrzeugrahmen 19 umgibt den Fahrer 16 teilweise. Im Falle eines Unfalles wird der Fahrer 16 durch den Fahrzeugrahmen 19 geschützt und zwar deshalb, weil er durch die Sicherheitsgurteinrichtung 18 an dem Sitz 17 festgehalten wird. In dieser Figur nicht sichtbare Gurtstrammer verbessern die Fixierung des Fahrers 16.

Im normalen Fahrbetrieb kann sich der Fahrer 16 aufgrund der Verwendung von nicht sichtbaren Gurtaufwickeleinrichtungen mit Tragheitssperren im wesentlichen frei auf dem Sitz 17 bewegen, was zum sicheren Steuern eines Zweirads unbedingt notwendig ist.

Der Sitz 17 hat im Schrittbereich des Fahrers 16 eine sich nach oben erstreckende Rampe 20. Diese verhindert, daß der Fahrer 16 bei einem Unfall unter den Beckengurten 7, 8 hindurchtauchen kann.

Dadurch, daß der Fahrer 16 im Fall eines Unfalls durch die Sicherheitsgurteinrichtung 18 am Sitz 17 fixiert wird, schützt ihn der Fahrzeugrahmen 19 vor Stoßverletzungen und es kann am Fahrzeug eine zusätzlich schützende Knautschzone ausgebildet werden.

## Patentansprüche

1. Sicherheitseinrichtung, insbesondere für ein Zweirad, bestehend aus einem Fahrzeugrahmen (19), der mindestens den Fahrer (16) des Fahrzeugs mindestens teilweise umgibt und mindestens einem Sitz (17) mit dazugehöriger Sicherheitsgurteinrichtung (18) aus zwei Schultergurten (12,13), wobei die beiden Enden jedes Schultergurtes (12, 13) an fahrzeugfesten Punkten (1, 4, 2, 5) so befestigt sind, dass sich jeder Schultergurt (12, 13) am Fahrer (16) entlang von dessen Schulterbereich bis zu dessen Oberschenkelbereich erstreckt, dadurch gekennzeichnet, dass zwei Bauchgurte (7, 8) vorgesehen sind, wobei je ein Bauchgurt (7, 8) durch je einen Schultergurt (12, 13) hindurchgeschleift geführt ist, und dass ein erstes Ende jedes Bauchgurtes (7, 8) mit einem Gurtstrammer (9) verbunden ist, der am Fahrzeug (19) fest angelenkt ist, während die zweiten Enden der Bauchgurte (7, 8) über ein zentrales Schloß (6) miteinander verbindbar sind.

2. Sicherheitseinrichtung nach Anspruch 1, dadurch gekennzeichnet, dass die Schultergurte (12, 13) an ihrem schulterseitigen Ende über ihre Befestigungspunkte (4, 5) am Fahrzeug mit Gurtstrammern (14, 15) versehen sind und dadurch der Körper des Fahrers (16) am Sitz (17) fixiert werden kann.

3. Sicherheitseinrichtung nach Anspruch 1 oder 2, dadurch gekennzeichnet, dass am Sitz (17), vor der Sitzfläche, im Schrittbereich des Fahrers (16) eine sich nach oben erstreckende Rampe (20) ausgeprägt ist.

## Claims

1. A safety device, especially for a two-wheeled vehicle, comprising a vehicle frame (19) which at least partly surrounds the vehicle driver (16) and at least one seat (17) and associated safety-belt device (18) comprising two shoulder belts (12, 13), the two ends of each shoulder belt (12, 13) being so fastened to places (1, 4, 2, 5) attached to the vehicle that each shoulder belt (12, 13) on the driver (16) extends along his shoulder region to his thigh region, characterised in that two belly bands (7, 8) are provided, each belly band (7, 8) being looped through a respective shoulder belt (12, 13), and a first end of each belly band (7, 8) is connected to a belt tightener (9) firmly pivoted to the vehicle (19) whereas the second ends of the belly bands (7, 8) are interconnected by a central lock (6).

2. A safety device according to claim 1, characterised in that the safety belts (12, 13) at their shoulder ends are provided with belt tighteners (14, 15) at the places (4, 5) where they are attached to the vehicle, and thus the driver's (16) body can be fastened to the seat (17).

3. A safety device according to claim 1 or claim 2, characterised in that an upwardly extending slope (20) is formed on the seat (17), in front of the seat surface, in the region near the driver's (16) feet.

## Revendications

1. Dispositif de sécurité, notamment pour véhicule à deux roues, composé d'un cadre de véhicule (19) qui entoure au moins en partie le conducteur (16) du véhicule, et d'au moins un siège (17) auquel est associé un dispositif à ceintures de sécurité (18) composé de deux ceintures d'épaule (12, 13) dont chacune a ses deux extrémités fixées à des poins (1, 4, 2, 5) solidaires du véhicule, de manière que chaque ceinture (12, 13) s'étende sur le conducteur (16) en allant de la zone des épaules jusqu'à la zone des cuisses,
caractérisé en ce qu'
il est prévu deux ceintures verticales (7, 8) coulissant chacune à travers une ceinture d'épaule correspondante (12, 13) et dont une première extrémité est reliée à un raidisseur de ceinture (9) fixé avec articulation sur le véhicule (19), tandis que les autres extrémités des deux ceintures (7, 8) sont reliées par une fermeture centrale (6).

2. Dispositif de sécurité selon la revendication 1,
caractérisé en ce que
les ceintures (12, 13) ont leurs extrémités situées vers les épaules, qui sont équipées, à leurs points de fixation (4, 5) sur le véhicule, de raidisseur de ceinture (14, 15) de façon que le corps du conducteur (18) puisse-être fixé sur le siège (17).

3. Dispositif de sécurité selon l'une quelconque des revendications 1 ou 2,
caractérisé en ce que
le siège (17), en avant de la surface d'assise, dans la zone située près des jambes du conducteur (16), présente une rampe (20) à pente ascendante.
